# EUROPÄISCHE PATENTSCHRIFT

(11) **EP 3 875 403 B1**
(45) Veröffentlichungstag und Bekanntmachung des Hinweises auf die Patenterteilung: **06.05.2026**
(21) Anmeldenummer: 21155120.5
(22) Anmeldetag: 04.02.2021
(51) Int. Cl.: B65G 1/04, B65G 1/137

(54) **VERFAHREN ZUM LAGERN UND/ODER ENTNEHMEN EINES LAGERGUTS IN ODER AUS EINEM LAGERSYSTEM SOWIE EIN ENTSPRECHENDES LAGERSYSTEM**
METHOD FOR STORING AND / OR REMOVING A STORED ITEM IN OR FROM A STORAGE SYSTEM AND A CORRESPONDING STORAGE SYSTEM
PROCÉDÉ DE STOCKAGE ET/OU DE RETRAIT D'UN PRODUIT DE STOCKAGE DANS OU D'UN SYSTÈME DE STOCKAGE, AINSI QUE SYSTÈME DE STOCKAGE CORRESPONDANT

(30) Priorität: 05.03.2020 DE 102020202859
(43) Veröffentlichungstag der Anmeldung: 08.09.2021
(73) Patentinhaber: Gebhardt Fördertechnik GmbH, D-74889 Sinsheim (DE)
(72) Erfinder: Gebhardt, Marco, 74889 Sinsheim (DE); Klopfenstein, Thomas, 67290 Wimmenau (FR); Eder, Jörg, 67661 Kaiserslautern (DE)
(74) Vertreter: Ullrich & Naumann PartG mbB

(56) Entgegenhaltungen:
- EP-A1- 2 530 035
- EP-A1- 2 543 611
- EP-A1- 3 375 734
- WO-A1-2012/113679
- WO-A1-2016/139003

## Beschreibung

Die Erfindung betrifft ein Verfahren zum Lagern und/oder Entnehmen eines Lagerguts in oder aus einem Lagersystem, insbesondere Lager- und Entnahmesystem, mit einem Regallager mit mehreren voneinander beabstandeten Lagerregalen, wobei die Lagerregale in mehreren übereinanderliegenden Regalebenen einen oder mehrere Stellplätze für ein Lagergut aufweisen und wobei zwischen benachbarten Lagerregalen jeweils eine Regalgasse gebildet ist, mindestens einem bidirektionalen Shuttle zum Transport von Lagergut oder Behältern für das Lagergut von oder zu einem Stellplatz, wobei das oder die Shuttle zum Fahren auf in den Regalgassen, vorzugsweise durch Führungsschienen, gebildeten Gassenstrecken in einer Regalebene und zum Fahren auf einer oder mehreren die Gassenstrecken, vorzugsweise an Enden der Regalgassen, verbindenden Verbindungsstrecken des Regallagers ausgebildet ist oder sind.

Des Weiteren betrifft die vorliegende Erfindung ein entsprechendes Lagersystem, insbesondere Lager- und Entnahmesystem, vorzugsweise zur Durchführung des Verfahrens zum Lagern und/oder Entnehmen eines Lagerguts in oder aus einem Lagersystem.

Es sind viele Möglichkeiten bekannt, um das Lagerprinzip Ware-zu-Mann umzusetzen. Neben den traditionellen Regalbediengeräten, die der Lagerung der Ware oder von Lagergut dienen und die mit Fördertechnik wie beispielsweise Rollenförderern kombiniert werden, um einen Transport der Ware zum Mann zu gewährleisten, gewinnen die Shuttle-Systeme verstärkt an Bedeutung. Shuttle-Systeme sind sehr kleine Regalbediengeräte, die im Gegensatz zu einem Regalbediengerät meist keinen oder in wenigen Fällen einen vergleichbar kleinen Hub aufweisen. Um die oberen Positionen in einem Regal zu erreichen, können die Shuttles auf eigenen Schienen in verschiedenen Regalhöhen bzw. Regalebenen fahren, um Behälter aus dem Regal ein- und auszulagern. Häufig sind die Shuttles den Fahrschienen bzw. Regalebenen fest zugeordnet. Manchmal können die Shuttles, beispielsweise über Shuttle-Heber oder durch Klettern, die Ebenen wechseln. Letztendlich können bei Shuttle-Systemen deutlich mehr Roboter parallel arbeiten als bei einem System aus Regalbediengeräten. Zur Aus- und Einlagerung der Behälter können ein oder mehrere Behälterheber eingesetzt werden, falls eine hohe Leistung gefordert ist. Falls das Shuttle durch Klettern oder einen Shuttle-Heber die Ebene wechseln kann, ist ein Behälterheber nicht notwendig.

Ein großer Vorteil der bidirektionalen Shuttle-Systeme, egal wie der Hub ausgeführt wird, ist die Möglichkeit zur späteren Steigerung der Leistung. Damit kann ein Kunde je nach Umsatzsteigerung nachträglich Roboter und gegebenenfalls Heber ergänzen, bis eine konzeptbedingte Leistungsgrenze erreicht ist. Eine übliche Fördertechnik vor einem solchen Shuttle-Lager kann dabei nicht zum Engpass werden, da diese nicht mehr notwendig ist. Ein Shuttle kann direkt den geeigneten oder richtigen Heber anfahren, sodass der Behälter am richtigen Arbeitsplatz ankommt. Die Sortierung mittels der Fördertechnik zwischen Lager und Arbeitsplatz entfällt.

Aus der EP 2 923 971 B1, Fig. 4, ist ein Lagersystem bekannt, bei dem Shuttles über einen Heber die Ebenen wechseln können, wobei keine Behälterheber an den Shuttles verwendet werden. Damit wird bei diesem System bei einem Erfordernis nach höherer Leistung, das bei diesem System mehr Shuttles bedeutet, der Shuttle-Heber zum Engpass. Dies wird durch mehrere in Reihe angeordnete Shuttle-Heber kompensiert, was jedoch die Kosten deutlich erhöht.

Dieses bekannte Lagersystem hat stets nur eine Querschiene, sodass die Shuttles die Regalgassen wechseln können. Hier kann es zu Blockaden kommen. Das gesamte System ist daher eher für geringe Leistungen geeignet und kaum auf hohe Leistungen nachrüstbar.

Bei dem bekannten Lagersystem fährt in der Praxis meist ein Shuttle mit einem Behälter auf einen Heber, fährt mit dem Heber nach unten zum Arbeitsplatz, gibt dort den Behälter ab, nimmt gegebenenfalls einen Behälter auf und fährt mit dem Heber wieder nach oben in eine Lagerebene. Dort kann das Shuttle problemlos aus dem Heber ausfahren und es kann ein dort wartendes Shuttle auf den Heber einfahren. Andere Konzepte von Lagersystemen nutzen gemäß der EP 3 375 734 A1 Behälterheber, wobei die Behälterheber dieser Lagersysteme zum Fahren von Einzelspielen ausgebildet sind, wobei 50 % der Fahrten der Heber also Leerfahrten ohne Behälter sind. Bei manchen dieser Lagersystemen weisen die Behälterheber zwei unabhängige Hubwägen je Mast auf, um die Leistung zu steigern. Die EP 3 375 734 A1 offenbart insbesondere ein Verfahren zum Lagern und/oder Entnehmen eines Lagerguts in oder aus einem Lagersystem gemäß dem Oberbegriff des Anspruchs 1 sowie ein Lagersystem gemäß dem Oberbegriff des Anspruchs 14.

Die EP 3 265 405 B1, Fig. 6 und 7, zeigt ein Lagersystem mit zwei Querschienen vor den Regalgassen, um einen Kreisverkehr zu ermöglichen. Dabei sind ein oder mehrere Shuttles einer Regalebene fest zugeordnet. Behälter werden über Heber im Einzelspiel an Arbeitsplätze übergeben.

Die WO 2011 113 053 A1, Fig. 1 und 5, zeigt ein Lagersystem, bei dem Behälter von Shuttles an einen Umlaufheber oder Paternoster übergeben werden, der diese Behälter über Fördertechnik an einen Arbeitsplatz bringt. Die Umlaufheber funktionieren über ein Rechensystem, das die Entnahme und Zuladung bei kontinuierlicher Bewegung erlaubt.

Die WO 2017 197 121 A1, Fig. 7A und 54 A, zeigt ein Lagersystem, bei dem Shuttles klettern und auf diese Weise selbstständig ohne Hilfe durch Shuttle-Heber die Regalebenen wechseln können. Dabei fahren die Shuttles einen Arbeitsplatz direkt an, wo sie für die Kommissionierung von unten nach oben aktiv klettern. Behälterheber sind nicht notwendig.

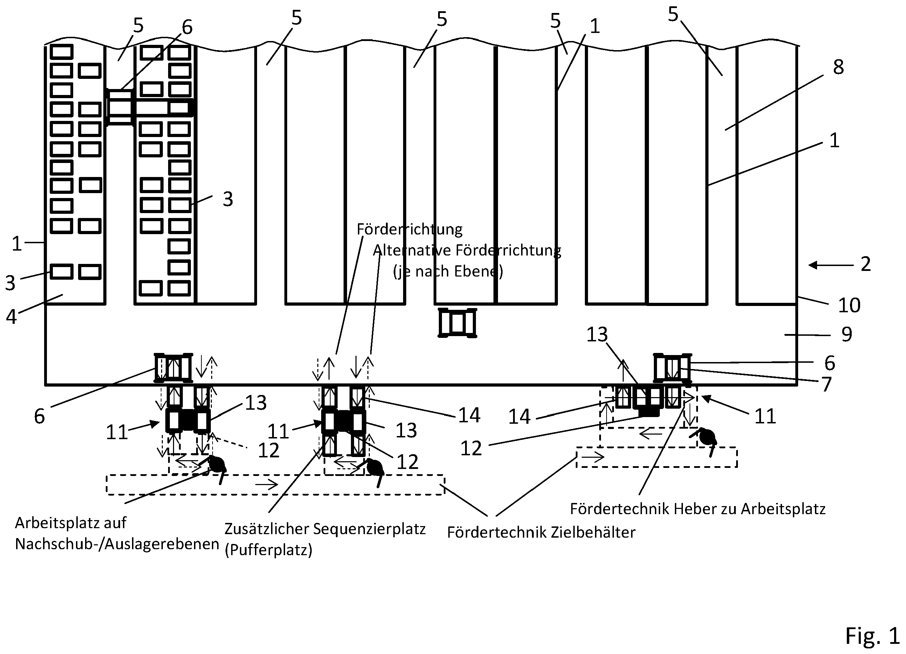

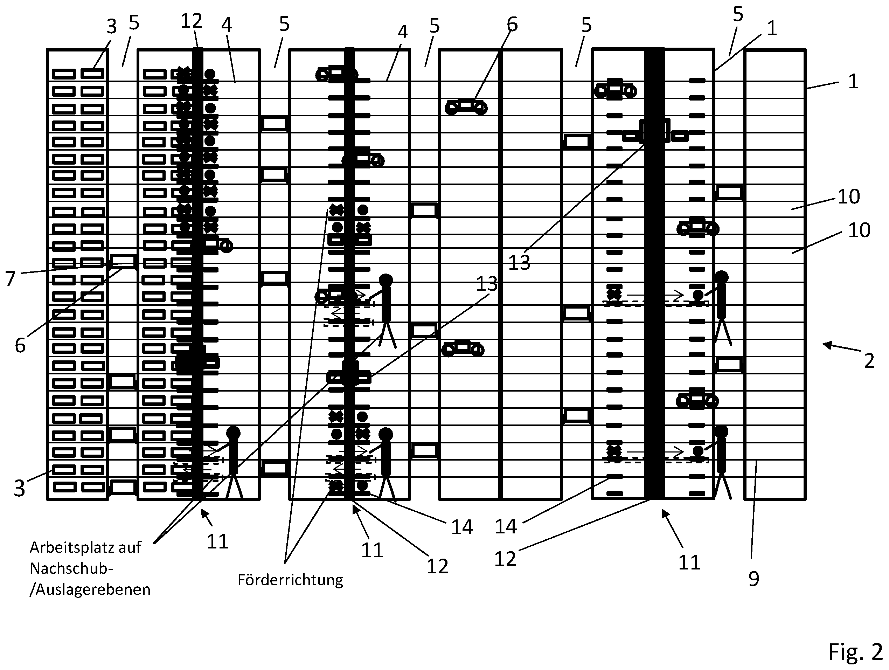

Die WO 2018 185 231 A1, Fig. 1, zeigt ein Lagersystem, bei dem keine bidirektionalen Shuttles eingesetzt werden. Dabei fährt ein zusätzliches Shuttle je Ebene auf einer Querschiene. Gemäß Fig. 2 schieben Shuttles Behälter zwischen den Gassen durch. Hierfür ist bei dem bekannten Lagersystem häufig Zeit, da die Shuttles im Gesamtsystem nicht den Engpass darstellen.

Die EP 2 530 035 A1 und die EP 2 327 643 B1 beschreiben Lagersysteme mit einer Zick-Zack-Anordnung in Kombination mit einem Ein-Ebenen-Shuttle, das nicht die Gassen wechselt. Dafür müssen immer ein Heberpaar, also zwei Heber in Kombination, eingesetzt werden. Je Regalebene ist eine Ein- und Auslagerung möglich, wobei jeder Heber je eine Hälfte der Regalebenen ein- und die andere Hälfte auslagern kann. Um ein Doppelspiel zu fahren, muss der Heber zwischen einer einlagernden und einer auslagernden Bahn umsetzen. Der zweite Heber übernimmt gespiegelt die Ein- und Auslagerung für die anderen Ebenen.

Die EP 2 794 430 B1, die EP 2 794 431 B1 und die EP 2 794 432 B1 zeigen eine beidseitige Anordnung einer Fördertechnik und eine durchgehend gleiche Förderrichtung. Damit kann ein Shuttle einen Behälter abgeben, die Position wechseln und einen Behälter aufnehmen. Ein Heber kann einmal diese Lagerebene anfahren und den mitgeführten Behälter abgeben sowie den vom Shuttle abgegebenen Behälter aufnehmen. Dazu muss der Heber nicht die Ebene wechseln.

Der vorliegenden Erfindung liegt die Aufgabe zugrunde, ein Verfahren zum Lagern und/oder Entnehmen eines Lagerguts in oder aus einem Lagersystem sowie ein entsprechendes Lagersystem anzugeben, wonach eine hohe Leistung bei reduzierten Kosten und reduziertem Platzbedarf mit konstruktiv einfachen Mitteln ermöglicht ist.

Erfindungsgemäß wird die voranstehende Aufgabe durch ein Verfahren mit den Merkmalen des Anspruchs 1 sowie durch ein Lagersystem mit den Merkmalen des Anspruchs 14 gelöst.

Danach weist das Lagersystem bei dem Verfahren gemäß Anspruch 1 mindestens einen an einer Gassenstrecke oder Verbindungsstrecke angrenzend angeordneten Heber auf, wobei der mindestens eine Heber zum Übergeben und/oder Übernehmen eines Lagerguts oder eines Behälters für ein Lagergut an ein und/oder von einem Shuttle und zum vertikalen Transport eines Lagerguts oder eines Behälters zwischen Regalebenen ausgebildet ist, und transportiert der Heber im direkten Anschluss an einen vertikalen Transport eines Lagerguts oder eines oder mehrerer Behälter von einer ersten Regalebene zu einer zweiten Regalebene ein Lagergut oder einen oder mehrere Behälter von der zweiten Regalebene oder von einer an die zweite Regalebene angrenzenden dritten Regalebene in die erste Regalebene oder in eine vierte Regalebene, und wobei je Regalebene und Heber zwei Pufferbahnen an einen oder den mindestens einen Heber angrenzen, wobei sich der Heber zwischen den Pufferbahnen befindet und jede der Pufferbahnen von einem Lagerroboter oder Shuttle angefahren werden kann.

Das Lagersystem gemäß Anspruch 14 weist mindestens einen an eine Gassenstrecke oder Verbindungsstrecke angrenzend angeordneten Heber auf, wobei der mindestens eine Heber zum Übergeben und/oder Übernehmen eines Lagerguts oder eines Behälters für ein Lagergut an ein und/oder von einem Shuttle und zum vertikalen Transport eines Lagerguts oder eines Behälters zwischen Regalebenen ausgebildet ist, wobei der Heber weiterhin derart ausgebildet ist, dass er im direkten Anschluss an einen vertikalen Transport eines Lagerguts oder eines oder mehrerer Behälter von einer ersten Regalebene zu einer zweiten Regalebene ein Lagergut oder einen oder mehrere Behälter von der zweiten Regalebene oder von einer an die zweite Regalebene angrenzenden dritten Regalebene in die erste Regalebene oder in eine vierte Regalebene transportieren kann, und wobei je Regalebene und Heber zwei Pufferbahnen an einen oder den mindestens einen Heber angrenzen, wobei sich der Heber zwischen den Pufferbahnen befindet und jede der Pufferbahnen von einem Lagerroboter oder Shuttle anfahrbar ist.

Dabei ist von Bedeutung, dass der Heber zunächst einen vertikalen Transport eines Lagerguts oder eines oder mehrerer Behälter von einer ersten Regalebene zu einer zweiten Regalebene durchführt. Hinsichtlich der Verwendung des Begriffs "erste Regalebene" in diesem Dokument darf ergänzt werden, dass es sich hierbei nicht um eine oberste oder unterste Regalebene eines Lagerregals handeln muss, sondern dass eine "erste Regalebene" jede beliebige Regalebene sein kann, von der aus ein vertikaler Transport eines Lagerguts oder eines oder mehrerer Behälter mittels eines Hebers zu einer beliebigen zweiten Regalebene erfolgen kann, wobei eine "erste Regalebene" beispielsweise die fünfthöchste oder zehnthöchste Regalebene in einem Lagerregal sein kann. Nach diesem vertikalen Transport erfolgt direkt ein weiterer vertikaler Transport eines Lagerguts oder eines oder mehrerer Behälter, und zwar von dieser zweiten Regalebene oder von einer an diese zweite Regalebene angrenzenden dritten Regalebene in die erste Regalebene oder in eine vierte Regalebene. Weite Leerfahrten des Hebers werden hierdurch vermieden. Der Fall, dass der Heber den weiteren vertikalen Transport von einer an die zweite Regalebene angrenzenden dritten Regalebene und nicht direkt von der zweiten Regalebene aus durchführt, tritt dann auf, wenn das Lagersystem in abwechselnder Weise Einlagerebenen und Auslagerebenen aufweist.

Bei dem erfindungsgemäßen Verfahren und dem erfindungsgemäßen Lagersystem werden bidirektionale Shuttle und Heber eingesetzt, die Doppelspiele realisieren, wobei sich hieraus in vorteilhafter Weise reduzierte Kosten, da weniger Heber und Pufferplätze zur Übergabe von Lagergut oder Behältern an die Shuttles realisiert werden müssen, und aufgrund der Tatsache, dass weniger Heber eingesetzt werden müssen, ein reduzierter Platzbedarf ergeben. Darüber hinaus wird eine hohe Leistung des Lagersystems bereitgestellt, da ein einzelner Heber aufgrund des Doppelspiels mehr leistet als herkömmlich genutzte Heber. Des Weiteren kann eine sequenzierte Auslagerung aus dem Lager unter Vermeidung einer aufwändigen nachträglichen Sequenzierung realisiert werden. Das erfindungsgemäße Verfahren dient zum automatischen Lagern von Lagergut in einem geeigneten Lagersystem.

Von großer Bedeutung ist, dass in erfindungsgemäßer Weise erkannt worden ist, dass ein Heber und Pufferplätze - insbesondere aktive Pufferplätze mit Motorrollen, Lichtschranken und zugehöriger Steuerung - wesentliche Kostentreiber sind und diese Komponenten in erfindungsgemäßer Weise möglichst effizient genutzt werden sollten. Falls ein Heber durch einen gezielten Betrieb ohne Leerfahrten mehr leistet, können damit signifikante Vorteile hinsichtlich Kosten, Platzbedarf und Leistung erzielt werden. Einerseits können damit die Anzahl der Heber und die hiermit verbundenen Kosten reduziert werden und wird andererseits bei wegfallenden Hebern weniger Platz in einer Lagerhalle benötigt, den ein Nutzer anderweitig verwenden kann. Ist darüber hinaus die Positionierung von zwei Arbeitsplätzen übereinander am gleichen leistungsstarken Heber, der ohne Leerfahrten betrieben wird, möglich, so können zusätzlich Platz und Kosten eingespart werden.

Das erfindungsgemäße vorzugsweise automatische Lagersystem bietet im Vergleich mit herkömmlichen Lagersystemen einen sehr flexiblen Aufbau. So können problemlos bei beispielsweise fünf Regalgassen nur ein Arbeitsplatz, zwei Arbeitsplätze - übereinander oder nebeneinander -, drei Arbeitsplätze - alle nebeneinander oder teilweise oder gegebenenfalls alle übereinander -, vier Arbeitsplätze - alle nebeneinander oder teilweise übereinander - usw. umgesetzt werden. Ein leistungsstarker Heber ohne Leerfahrten bietet mehr Freiheiten und damit eine günstige und leistungsstarke Anpassungsmöglichkeit des Lagersystems. Hierdurch können Bedürfnisse unterschiedlicher Nutzer befriedigt werden, beispielsweise von Kunden, die eine Bearbeitungszeit am Arbeitsplatz von wenigen Sekunden wünschen - beispielsweise je Arbeitsplatz ein eigener Heber -, und auch von Kunden, bei denen längere Prozesse stattfinden - beispielsweise mehrere Arbeitsplätze je Heber.

In jedem Fall können ein, mehrere oder alle Heber in besonders vorteilhafter Weise direkt an einen Arbeitsplatz oder an mehrere Arbeitsplätze angebunden sein. Ein derartiger, direkt am Heber angebundene Arbeitsplatz kann aus Fördertechnik bestehen, die mindestens einen Halbkreis mit festgelegter Hauptrichtung bilden kann.

Folglich sind mit dem erfindungsgemäßen Verfahren und dem erfindungsgemäßen Lagersystem ein Verfahren und ein Lagersystem bereitgestellt, wonach eine hohe Leistung bei reduzierten Kosten und reduziertem Platzbedarf mit konstruktiv einfachen Mitteln ermöglicht ist.

Bei einer konkreten Ausführungsform kann mindestens eine der Regalebenen eine Einlagerebene und/oder mindestens eine der Regalebenen eine Nachschub- oder Auslagerebene sein. Hierbei kann je nach individuellem Anwendungsfall und je nach Erfordernis eine geeignete Konfiguration im Rahmen der Erfindung realisiert werden.

Zur Bereitstellung einer besonders hohen Leistung kann der mindestens eine Heber einen oder mehrere - vorzugsweise an einem Masten des mindestens einen Hebers - vertikal verfahrbare Hubwagen für jeweils mindestens ein Lagergut und/oder jeweils mindestens einen Behälter aufweisen. Bei einer konkreten Ausführungsform kann der Heber aus einem Masten und einem oder mehreren vertikal verfahrenden oder verfahrbaren Hubwagen bestehen oder einen Masten und einen oder mehrere vertikal verfahrbare Hubwagen aufweisen. Auch hier kann das Verfahren oder das Lagersystem in flexibler Weise an eine erforderliche Leistung angepasst werden.

In bevorzugter Weise kann eine Ein- und Auslagerung von Lagergut von vorzugsweise mehreren Einlagerebenen auf eine oder mehrere Nachschub- oder Auslagerebenen ermöglicht sein. Dabei kann der mindestens eine Heber den vertikalen Transport zwischen Regalebenen derart durchführen, dass die Ein- und die Auslagerung von vielen Lagerebenen auf eine oder mehrere Nachschub-/Auslagerebenen ermöglicht wird. Auch dies bildet eine Basis für hohe Leistung und Flexibilität.

Weiterhin im Hinblick auf eine besonders hohe Leistung und hohe Flexibilität können oder kann ein Übergeben und/oder Übernehmen eines Lagerguts oder eines Behälters durch den mindestens einen Heber an einen oder von einem Pufferplatz erfolgen, wobei vorzugsweise der Pufferplatz einer Regalebene zugeordnet ist. Ein derartiger Pufferplatz kann eine vorübergehende Zwischenlagerung eines Lagerguts oder Behälters ermöglichen.

Bei einer bevorzugten Ausführungsform des Verfahrens können im Rahmen des Lagerns und/oder Entnehmens des Lagerguts die folgenden konkreten Schritte durchgeführt werden:
- Übergeben eines Lagerguts von einer Nachschub- oder Auslagerebene auf einen Pufferplatz;
- Übernehmen des Lagerguts von dem Pufferplatz auf der Nachschub- oder Auslagerebene durch einen Heber;
- vertikales Transportieren des Lagerguts auf eine Lagerebene durch den Heber;
- Abgeben des Lagerguts an einen Pufferplatz auf der Lagerebene durch den Heber;
- Übernehmen des Lagerguts von dem Pufferplatz auf der Lagerebene durch das Shuttle;
- Einlagern des Lagerguts in eine Regalgasse durch ein Shuttle;
- Auslagern eines Lagerguts aus einer Regalgasse durch das Shuttle;
- Übergeben des Lagerguts an einen zweiten Pufferplatz auf der Lagerebene durch das Shuttle;
- Übernehmen des Lagerguts von dem zweiten Pufferplatz durch einen Heber;
- vertikales Transportieren des Lagerguts zu einer Nachschub- oder Auslagerebene durch den Heber;
- Abgeben des Lagerguts an eine Pufferbahn durch den Heber; und
- Übergeben des Lagerguts von der Pufferbahn an einen Arbeitsplatz, eine Fördertechnik oder ein Lagerfahrzeug. Ein derartiger Arbeitsplatz, eine derartige Fördertechnik oder ein derartiges Lagerfahrzeug kann den Ausgangspunkt für eine Ausschleusung für einen Nachschubvorgang bilden.

In weiter vorteilhafter Weise kann je Regalebene und Heber eine Pufferbahn an einen oder den mindestens einen Heber angrenzen, wobei vorzugsweise mehrere Pufferbahnen abwechselnd als Ein- und Auslagerbahnen angeordnet sind. Mittels einer derartigen Pufferbahn oder mittels derartigen Pufferbahnen kann eine besonders hohe Flexibilität und damit Leistungsoptimierung im Rahmen des erfindungsgemäßen Verfahrens erfolgen.

Alternativ oder zusätzlich zur vorgenannten Ausführungsform kann je Regalebene und Heber eine weitere Pufferbahn an einen oder den mindestens einen Heber angrenzen, sodass sich der Heber zwischen den Pufferbahnen befindet, aber die weitere Pufferbahn nicht von einem Shuttle angefahren werden kann. Auch dieses Merkmal bietet eine Erhöhung der Flexibilität und ermöglicht hierdurch eine Leistungsoptimierung des Verfahrens.

Erfindungsgemäß grenzen je Regalebene und Heber zwei Pufferbahnen an einen oder den mindestens einen Heber an, wobei sich der Heber zwischen den Pufferbahnen befindet und jede der Pufferbahnen von einem Lagerroboter oder Shuttle anfahrbar ist. Auch hierdurch wird eine Erhöhung der Flexibilität ermöglicht, woraus sich eine Leistungsoptimierung des Verfahrens ergibt.

Im Hinblick auf eine besonders hohe Flexibilität zur Anpassung an unterschiedliche Erfordernisse kann ein sequenziertes Auslagern erfolgen oder ermöglicht sein.

Zur Gewährleistung eines sicheren und komfortablen Betriebs des Lagersystems und einer entsprechend sicheren und komfortablen Durchführung des Verfahrens kann dem Lagersystem ein übergeordnetes Steuerungssystem zur vorzugsweise vollautomatischen Funktion zugeordnet werden, wobei vorzugsweise mindestens ein Bereich des Lagersystems oder - beispielsweise in besonders dramatischen Gefahrensituationen - auch das gesamte Lagersystem deaktiviert werden kann, falls eine Person, beispielsweise ein Servicetechniker, einen vorgebbaren Bereich des Lagersystems oder das Lagersystem betritt. Durch diesen optionalen Deaktivierungsvorgang wird ein besonders hohes Sicherheitsniveau beim Betrieb des Lagersystems und bei entsprechender Durchführung des Verfahrens gewährleistet.

Im Hinblick auf eine besonders hohe Effizienz und damit Leistung des Verfahrens und des entsprechenden Lagersystems kann mindestens ein Shuttle einen geeigneten Heber mit einem direkt am Heber angeordneten Arbeitsplatz anfahren. Hierdurch werden Transportwege kurz gehalten und aufwändige Übergabeebenen vermieden.

In besonders effizienter Weise können am gleichen Heber mehrere Arbeitsplätze übereinander und/oder nebeneinander angeordnet sind. Hierdurch kann eine hohe Leistung des Verfahrens und des entsprechenden Lagersystems realisiert werden. In weiter Vorteilhafterweise kann ein dem Lagersystem zugeordneter Shuttle-Heber für das mindestens eine Shuttle verwendet wird. Hierdurch wird ein Transport eines Shuttles von einer Regalebene zu einer anderen Regalebene ermöglicht. Bei geschickter Realisierung dieses Merkmals kann die Anzahl an erforderlichen Shuttles reduziert und damit eine Kosteneinsparung erreicht werden.

Bei einer vorteilhaften konkreten Ausführungsform des Verfahrens kann ein automatisches Lagern von Gütern oder Lagergut in einem Lagersystem erfolgen, das mehrere Lagerregale aufweist, zwischen denen sich je eine Regalgasse für die Bedienung von bidirektionalen Shuttles bildet. Auf jeder Regalebene oder Lagerebene befindet sich eine Führungsschiene, wobei alle Führungsschienen einer Ebene über eine oder mehrere Verbindungsstrecken - gegebenenfalls an beiden Gassenenden oder beispielsweise bei einem L-Regal an drei Enden - verbunden sind, um einen Heber für die Übergabe und Übernahme von Lagergut oder einem Behälter anfahren zu können, wobei der Heber den vertikalen Transport zwischen den Ebenen übernimmt, sodass die Ein- und die Auslagerung von vielen Lagerebenen auf eine oder mehrere Nachschub-/Auslagerebenen ermöglicht wird, wobei die folgenden Schritte durchgeführt werden:
- Übergabe eines Gutes von einer Nachschub-/Auslagerebene auf einen Pufferplatz,
- Übernahme des oder eines Gutes vom Pufferplatz durch einen Heber,
- vertikaler Transport auf eine Lagerebene durch den Heber,
- Abgabe an einen Pufferplatz auf der Lagerebene durch den Heber,
- Übernahme des Gutes vom Pufferplatz durch ein Shuttle,
- Einlagern des Gutes in eine Regalgasse durch das Shuttle,
- Auslagern des oder eines Gutes aus einer Regalgasse durch das Shuttle,
- Übergabe an einen zweiten Pufferplatz durch das Shuttle,
- Übernahme des Gutes von der Lagerebene durch einen Heber,
- vertikaler Transport an eine Nachschub-/Auslagerebene durch den Heber,
- Abgabe an eine Pufferbahn durch den Heber und
- Übergabe eines Gutes von der Pufferbahn an einen oder mehrere Kommissionier-Arbeitsplätze oder Fördertechnik oder Lagerfahrzeuge (letzte Punkte, falls Ausschleusung für Nachschub),
- wobei der Heber beim vertikalen Transport von einer Nachschub-/Auslagerebene auf eine Einlagerebene und beim vertikalen Transport von einer Einlagerebene auf eine Nachschub-/Auslagerebene einen oder mehrere Behälter befördern kann (Doppelspiele) und
- wobei der Heber aus einem Masten und einem oder mehreren vertikal verfahrenden oder verfahrbaren Hubwagen besteht.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie des erfindungsgemäßen Lagersystems anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer Draufsicht ein Ausführungsbeispiel des erfindungsgemäßen Lagersystems und
- Fig. 2: in einer Seitenansicht das Ausführungsbeispiel des erfindungsgemäßen Lagersystems aus Fig. 1.

Fig. 1 zeigt in einer Draufsicht ein Ausführungsbeispiel des erfindungsgemäßen Lagersystems, das hier als Lager- und Entnahmesystem ausgebildet ist. Das Lagersystem weist mehrere Lagerregale 1 auf, die voneinander beabstandet ein Regallager 2 für ein Lagergut 3 bilden. Die Lagerregale 1 weisen in mehreren übereinanderliegenden Regalebenen 10 mehrere Stellplätze 4 für das Lagergut 3 auf. Das Lagersystem weist im vorliegenden Fall fünf Regalgassen 5 auf.

Das Lagersystem weist des Weiteren mehrere bidirektionale Shuttle 6 zum Transport von Lagergut 3 oder von Behältern 7 für das Lagergut 3 von oder zu einem Stellplatz 4 auf. Die Shuttle 6 sind zum Fahren auf in den Regalgassen 5 gebildeten Gassenstrecken 8 in einer Regalebene 10 und zum Fahren auf mehreren die Gassenstrecken 8 an Enden der Regalgassen 5 verbindenden Verbindungsstrecken 9 ausgebildet.

An die Verbindungsstrecken 9 angrenzend sind Heber 11 angeordnet, die zum Übergeben und/oder Übernehmen eines Lagerguts 3 oder eines Behälters 7 für ein Lagergut 3 an ein und/oder von einem Shuttle 6 und zum vertikalen Transport eines Lagerguts 3 oder eines Behälters 7 zwischen Regalebenen 10 ausgebildet sind. Heber 11 weisen einen Masten 12 und an dem Masten 12 vertikal verfahrbare Hubwagen 13 für jeweils mindestens ein Lagergut 3 und/oder jeweils mindestens einen Behälters 7 auf. Des Weiteren sind Pufferplätze 14 im Bereich der Heber 11. realisiert.

Bei dem hier gezeigten Lagersystem sind einfachtiefe Regalgassen 5 - das Shuttle 6 führt einen Behälter 7 mit sich - mittig zwischen doppeltiefen Lagerregalen 1 - zwei Behälter 7 können hintereinander angeordnet werden - angeordnet, wobei eine Lagerung in Längsrichtung gezeigt ist. Es sind jedoch alternativ zahlreiche andere Konfigurationen wie beispielsweise eine quer erfolgende dreifachtiefe Lagerung denkbar. Sämtliche Regalgassen 5 oder Gassenstrecken 8 sind durch eine oder mehrere - beispielsweise vorne und hinten an den Regalgassen 5 oder Gassenstrecken 8 - Verbindungsstrecken 9 miteinander verbunden. Die Verbindungsstrecken 9 sind jeweils zweispurig ausgebildet, um beispielsweise Ausweichmanöver der Shuttles 6 zu ermöglichen, falls ein erstes Shuttle 6 am Heber 11 Behälter 7 aufnimmt und ein zweites Shuttle 6 das erste Shuttle 6 überholen möchte. Über diese Verbindungsstrecken 9 können die Shuttles 6 sowohl jede Regalgasse 5 als auch jeden Heber 11 anfahren. Jedes Shuttle 6 hat also alle Behälter 7 auf dieser Regalebene 10 im Zugriff für Auslagerungen und kann für Einlagerungen alle Stellplätze 4 der Lagerregale 1 in dieser Regalebene 10 anfahren. Damit bietet das Lagersystem eine hohe Verfügbarkeit beim Ausfall einer Komponente. Auf einer Regalebene 10 können dabei ein oder mehrere Shuttles 6 fahren. Es wäre auch denkbar, einen hier nicht gezeigten Shuttle-Heber hinzuzufügen, sodass einzelne Regalebenen 10 nicht mit einem Shuttle 6 besetzt sein müssen.

Wenn der Benutzer des Lagersystems einen eingelagerten Behälter 7 anfordert, dann wählt die übergeordnete Steuerung die entsprechende Regalebene 10 aus, wo dieser Behälter 7 gelagert wird. Gleichzeitig weist sie den Auftrag einem der Arbeitsplätze zu. Ein Shuttle 6 fährt in das Lagerregal 1 an den entsprechenden Stellplatz 4 und nimmt den Behälter 7 auf, wobei erforderlichenfalls eine vorherige Umlagerung notwendig wird, falls ein anderer Behälter 7 vor dem gewünschten Behälter 7 steht. Das Shuttle 6 fährt dann mit dem Behälter 7 auf die die Gassenstrecken 8 verbindende Verbindungsstrecke 9. Dort fährt es den geeigneten oder zugewiesenen Heber 11 an, der direkt an einen Arbeitsplatz angebunden ist, und gibt den Behälter 7 auf einen Pufferplatz 14 ab. Auf diesem Pufferplatz 14 steht der Behälter 7, bis ein Hubwagen 13 des Hebers 11 entsprechend der Steuerung durch das übergeordnete System die Regalebene 10 anfährt, wo der eben beschriebene Behälter 7 auf dem Pufferplatz 14 bereitsteht. Der Heber 11 nimmt den Behälter 7 vom Pufferplatz 14 auf und fördert den Behälter 7 vertikal auf eine Auslagerebene 10.

Dort wird der Behälter 7 vom Heber 11 an ein kurzes Stück Fördertechnik abgegeben, die den Behälter 7 zu einem Arbeitsplatz befördert. Nach der Kommissionierung, beispielsweise entnimmt der Kommissionierer eines von fünf roten T-Shirts, wird der Behälter 7 über die Fördertechnik zum Heber 11 zurückbefördert. Direkt an der Übergabe zum Heber 11 wartet der Behälter 7, bis der Heber 11 mit einem weiteren angeforderten Behälter 7 auf diese Auslagerebene 10 ankommt. Sobald der Heber 11 ankommt, gibt er den weiteren angeforderten Behälter 7 ab und nimmt den wartenden Behälter 7 auf. Dann fährt der Heber 11 - je nach Lagerstrategie - meist auf eine Ebene, wo gegebenenfalls ein weiterer für den Kommissioniervorgang angeforderter Behälter 7 auf einem Pufferplatz 14 wartet. Falls das Lagersystem abwechselnd angeordnete Auslagerebenen 10 und Einlagerebenen 10 aufweist, ist ein Umsetzen erforderlich. Dort angekommen, gibt der Heber 11 den mitgeführten Behälter 7 ab und nimmt den dort wartenden Behälter 7 auf, um diesen auf die jeweilige Auslagerebene 10 zu bringen.

Der Heber 11 fährt also normalerweise keine Leerfahrten. Dies gilt in Strenge nur in Bezug auf den rechten Heber der Fig. 1 und 2. Beim mittigen und linken Heber 11 muss nach der Einlagerung die Lagerebene 10 für die Auslagerung gewechselt werden, da hier Auslagerebenen 10 und Einlagerebenen 10 abwechselnd genutzt werden. Damit tritt zwar eine Lehrfahrt auf, wobei diese aber vergleichsweise kurz ist und damit weniger leistungsmindernd als eine lange Leerfahrt bis zu einer gegebenenfalls weit entfernten Nachschub-/Auslagerebene (herkömmliches Einzelspiel).

Neben der Versorgung der Arbeitsplätze mit Waren bzw. Lagergut 3 muss der Heber 11 auch den Nachschub, also die neu einzulagernde Ware bzw. das neu einzulagernde Lagergut 3 befördern. Die Neubestückung der Behälter 7 kann je nach Regallager 2 ebenso an einem Arbeitsplatz erfolgen. Oft wird jedoch ein leerer Behälter 7 auf eine bestimmte Auslagerebene 10 vom Heber 11 gebracht, wo er dann nicht den Arbeitsplatz anfährt, sondern ausgeschleust und zum Wareneingang beispielsweise in eine eigene Halle gebracht werden kann. Dort kann der Behälter 7 mit Lagergut 3 beispielsweise von Paletten oder aus Kartons oder aus der Produktion befüllt werden, wobei die Informationen, in welchen Behälter 7 welches Lagergut 3 kommt, der übergeordneten Steuerung vorher zur Verfügung gestellt werden. Danach wird der befüllte Behälter 7 wieder zum Heber 11 befördert, wo er meist auf der gleichen Regalebene 10 wieder eingelagert wird, wo er zuvor ausgelagert wurde.

Der Heber 11 kann also auf der einen Seite alle als Lagerebenen dienenden Regalebenen 10 anfahren, um dort Lagergut 3 mithilfe der Shuttles 6 ein- und später wieder auszulagern. Andererseits kann der Heber 11 Behälter 7 an Nachschub-/Auslagerebenen abgeben, wo diese entweder an Arbeitsplätzen bearbeitet oder gegebenenfalls zum Wareneingang ausgeschleust werden. Üblicherweise ist die Zahl der als Lagerebenen dienenden Regalebenen 10 deutlich größer als die Zahl der Nachschub-/Auslagerebenen. In der beispielhaften Ausführung der Fig. 1 und 2 gibt es zwanzig als Lagerebenen dienende Regalebenen 10 und eine - links - bzw. zwei - mittig und rechts - Auslagerebenen 10, wobei hier eine Auslagerebene zugleich eine Nachschubebene ist.

Fig. 2 zeigt in einer Seitenansicht das Ausführungsbeispiel aus Fig. 1. Das Lagersystem weist zwanzig Regalebenen 10 auf. Der linke Heber 11 hat dabei in übereinanderliegenden Regalebenen 10 entgegengesetzt ausgerichtete Pufferbahnen, von denen einige durch Kreuze und ausgefüllte Vollkreise dargestellt sind. Somit kann der Heber 11 die Hälfte der Pufferbahnen zum Einlagern und die andere Hälfte zum Auslagern anfahren, sodass der Heber 11 Leerfahrten vermeiden kann. Um jede Regalebene 10 sowohl mit Ein- als auch mit Auslagerungen zu versorgen, müssen stets an einem Arbeitsplatz zwei Heber 11 in Kombination eingesetzt werden. Die rechte Heberlösung ermöglicht je Arbeitsplatz nur einen Heber 11.

Bei dem beispielhaft dargestellten Lagersystem gemäß den Fig. 1 und 2 sind von links nach rechts drei unterschiedliche Konzepte von Lagersystemen dargestellt. Beim linken Konzept existiert ein Arbeitsplatz auf einer Nachschub-/Auslagerebene 10. Beim mittigen Konzept sind zusätzlich mehrere Sequenzierplätze - Pufferplätze 14 - realisiert. Beim mittigen und rechten Konzept sind zwei Auslagerebenen 10 realisiert.

Hinsichtlich weiterer vorteilhafter Ausgestaltungen des erfindungsgemäßen Verfahrens sowie des erfindungsgemäßen Lagersystems wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Lagerregal
- 2: Regallager
- 3: Lagergut
- 4: Stellplatz
- 5: Regalgasse
- 6: Shuttle
- 7: Behälter
- 8: Gassenstrecke
- 9: Verbindungsstrecke
- 10: Regalebene
- 11: Heber
- 12: Mast
- 13: Hubwagen
- 14: Pufferplatz

## Patentansprüche

1. Verfahren zum Lagern und/oder Entnehmen eines Lagerguts (3) in oder aus einem Lagersystem, insbesondere Lager- und Entnahmesystem, mit
einem Regallager (2) mit mehreren voneinander beabstandeten Lagerregalen (1), wobei die Lagerregale (1) in mehreren übereinanderliegenden Regalebenen (10) einen oder mehrere Stellplätze (4) für ein Lagergut (3) aufweisen und wobei zwischen benachbarten Lagerregalen (1) jeweils eine Regalgasse (5) gebildet ist,
mindestens einem bidirektionalen Shuttle (6) zum Transport von Lagergut (3) oder Behältern (7) für das Lagergut (3) von oder zu einem Stellplatz (4), wobei das oder die Shuttle (6) zum Fahren auf in den Regalgassen (5), vorzugsweise durch Führungsschienen, gebildeten Gassenstrecken (8) in einer Regalebene (10) und zum Fahren auf einer oder mehreren die Gassenstrecken (8), vorzugsweise an Enden der Regalgassen (5), verbindenden Verbindungsstrecken (9) des Regallagers (2) ausgebildet ist oder sind,
und mindestens einem an eine Gassenstrecke (8) oder Verbindungsstrecke (9) angrenzend angeordneten Heber (11), wobei der mindestens eine Heber (11) zum Übergeben und/oder Übernehmen eines Lagerguts (3) oder eines Behälters (7) für ein Lagergut (3) an ein und/oder von einem Shuttle (6) und zum vertikalen Transport eines Lagerguts (3) oder eines Behälters (7) zwischen Regalebenen (10) ausgebildet ist,
**dadurch gekennzeichnet, dass**
der Heber (11) im direkten Anschluss an einen vertikalen Transport eines Lagerguts (3) oder eines oder mehrerer Behälter (7) von einer ersten Regalebene (10) zu einer zweiten Regalebene (10) ein Lagergut (3) oder einen oder mehrere Behälter (7) von der zweiten Regalebene (10) oder von einer an die zweite Regalebene (10) angrenzenden dritten Regalebene (10) in die erste Regalebene (10) oder in eine vierte Regalebene (10) transportiert und
dass je Regalebene (10) und Heber (11) zwei Pufferbahnen an einen oder den mindestens einen Heber (11) angrenzen, wobei sich der Heber (11) zwischen den Pufferbahnen befindet und jede der Pufferbahnen von einem Lagerroboter oder Shuttle (6) angefahren werden kann.

2. Verfahren nach Anspruch 1, **dadurch gekennzeichnet, dass** mindestens eine der Regalebenen (10) eine Einlagerebene und/oder mindestens eine der Regalebenen (10) eine Nachschub- oder Auslagerebene ist.

3. Verfahren nach Anspruch 1 oder 2, **dadurch gekennzeichnet, dass** der mindestens eine Heber (11) einen oder mehrere - vorzugsweise an einem Masten (12) des mindestens einen Hebers (11) - vertikal verfahrbare Hubwagen (13) für jeweils mindestens ein Lagergut (3) und/oder jeweils mindestens einen Behälter (7) aufweist.

4. Verfahren nach einem der Ansprüche 1 bis 3, **dadurch gekennzeichnet, dass** eine Ein- und Auslagerung von Lagergut (3) von vorzugsweise mehreren Einlagerebenen auf eine oder mehrere Nachschub- oder Auslagerebenen ermöglicht wird.

5. Verfahren nach einem der Ansprüche 1 bis 4, **dadurch gekennzeichnet, dass** ein Übergeben und/oder Übernehmen eines Lagerguts (3) oder eines Behälters (7) durch den mindestens einen Heber (11) an einen oder von einem Pufferplatz (14) erfolgt, wobei vorzugsweise der Pufferplatz (14) einer Regalebene (10) zugeordnet ist.

6. Verfahren nach einem der Ansprüche 1 bis 5, **dadurch gekennzeichnet, dass** im Rahmen des Lagerns und/oder Entnehmens des Lagerguts (3) die folgenden Schritte durchgeführt werden:
- Übergeben eines Lagerguts (3) von einer Nachschub- oder Auslagerebene auf einen Pufferplatz (14);
- Übernehmen des Lagerguts (3) von dem Pufferplatz (14) auf der Nachschub- oder Auslagerebene durch einen Heber (11);
- vertikales Transportieren des Lagerguts (3) auf eine Lagerebene durch den Heber (11);
- Abgeben des Lagerguts (3) an einen Pufferplatz (14) auf der Lagerebene durch den Heber (11);
- Übernehmen des Lagerguts (3) von dem Pufferplatz (14) auf der Lagerebene durch das Shuttle (6);
- Einlagern des Lagerguts (3) in eine Regalgasse (5) durch ein Shuttle (6);
- Auslagern eines Lagerguts (3) aus einer Regalgasse (5) durch das Shuttle (6);
- Übergeben des Lagerguts (3) an einen zweiten Pufferplatz (14) auf der Lagerebene durch das Shuttle (6);
- Übernehmen des Lagerguts (3) von dem zweiten Pufferplatz (14) durch einen Heber (11);
- vertikales Transportieren des Lagerguts (3) zu einer Nachschub- oder Auslagerebene durch den Heber (11);
- Abgeben des Lagerguts (3) an eine Pufferbahn durch den Heber (11); und
- Übergeben des Lagerguts (3) von der Pufferbahn an einen Arbeitsplatz, eine Fördertechnik oder ein Lagerfahrzeug.

7. Verfahren nach einem der Ansprüche 1 bis 6, **dadurch gekennzeichnet, dass** je Regalebene (10) und Heber (11) eine Pufferbahn an einen oder den mindestens einen Heber (11) angrenzt, wobei vorzugsweise mehrere Pufferbahnen abwechselnd als Ein- und Auslagerbahnen angeordnet sind.

8. Verfahren nach Anspruch 7, **dadurch gekennzeichnet, dass** je Regalebene (10) und Heber (11) eine weitere Pufferbahn an einen oder den mindestens einen Heber (11) angrenzt, sodass sich der Heber (11) zwischen den Pufferbahnen befindet, aber die weitere Pufferbahn nicht von einem Shuttle (6) angefahren werden kann.

9. Verfahren nach einem der Ansprüche 1 bis 8, **dadurch gekennzeichnet, dass** ein sequenziertes Auslagern erfolgt oder ermöglicht wird.

10. Verfahren nach einem der Ansprüche 1 bis 9, **dadurch gekennzeichnet, dass** dem Lagersystem ein übergeordnetes Steuerungssystem zur vorzugsweise vollautomatischen Funktion zugeordnet wird, wobei vorzugsweise mindestens ein Bereich des Lagersystems deaktiviert wird, falls eine Person, beispielsweise ein Servicetechniker, einen vorgebbaren Bereich des Lagersystems oder das Lagersystem betritt.

11. Verfahren nach einem der Ansprüche 1 bis 10, **dadurch gekennzeichnet, dass** mindestens ein Shuttle (6) einen geeigneten Heber (11) mit einem direkt am Heber (11) angeordneten Arbeitsplatz anfahren kann.

12. Verfahren nach einem der Ansprüche 1 bis 11, **dadurch gekennzeichnet, dass** am gleichen Heber (11) mehrere Arbeitsplätze übereinander und/oder nebeneinander angeordnet sind.

13. Verfahren nach einem der Ansprüche 1 bis 12, **dadurch gekennzeichnet, dass** ein dem Lagersystem zugeordneter Shuttle-Heber für das mindestens eine Shuttle (6) verwendet wird.

14. Lagersystem, insbesondere Lager- und Entnahmesystem, vorzugsweise zur Durchführung des Verfahrens zum Lagern und/oder Entnehmen eines Lagerguts (3) in oder aus einem Lagersystem nach einem der Ansprüche 1 bis 13, mit
einem Regallager (2) mit mehreren voneinander beabstandeten Lagerregalen (1), wobei die Lagerregale (1) in mehreren übereinanderliegenden Regalebenen (10) einen oder mehrere Stellplätze (4) für ein Lagergut (3) aufweisen und wobei zwischen benachbarten Lagerregalen (1) jeweils eine Regalgasse (5) gebildet ist,
mindestens einem bidirektionalen Shuttle (6) zum Transport von Lagergut (3) oder Behältern (7) für das Lagergut (3) von oder zu einem Stellplatz (4), wobei das oder die Shuttle (6) zum Fahren auf in den Regalgassen (5), vorzugsweise durch Führungsschienen, gebildeten Gassenstrecken (8) in einer Regalebene (10) und zum Fahren auf einer oder mehreren die Gassenstrecken (8), vorzugsweise an Enden der Regalgassen (5), verbindenden Verbindungsstrecken (9) des Regallagers (2) ausgebildet ist oder sind,
und mindestens einem an eine Gassenstrecke (8) oder Verbindungsstrecke (9) angrenzend angeordneten Heber (11), wobei der mindestens eine Heber (11) zum Übergeben und/oder Übernehmen eines Lagerguts (3) oder eines Behälters (7) für ein Lagergut (3) an ein und/oder von einem Shuttle (6) und zum vertikalen Transport eines Lagerguts (3) oder eines Behälters (7) zwischen Regalebenen (10) ausgebildet ist,
**dadurch gekennzeichnet, dass**
der Heber (11) derart ausgebildet ist, dass er im direkten Anschluss an einen vertikalen Transport eines Lagerguts (3) oder eines oder mehrerer Behälter (7) von einer ersten Regalebene (10) zu einer zweiten Regalebene (10) ein Lagergut (3) oder einen oder mehrere Behälter (7) von der zweiten Regalebene (10) oder von einer an die zweite Regalebene (10) angrenzenden dritten Regalebene (10) in die erste Regalebene (10) oder in eine vierte Regalebene (10) transportieren kann, und
dass je Regalebene (10) und Heber (11) zwei Pufferbahnen an einen oder den mindestens einen Heber (11) angrenzen, wobei sich der Heber (11) zwischen den Pufferbahnen befindet und jede der Pufferbahnen von einem Lagerroboter oder Shuttle (6) anfahrbar ist.

## Claims

1. A method for storing and/or removing stored goods (3) in or from a storage system, in particular a storage and removal system, with
a rack storage unit (2) having multiple spaced-apart storage racks (1), wherein the storage racks (1) have one or more storage spaces (4) for stored goods (3) in multiple superposed rack levels (10), and wherein a rack aisle (5) is formed in each case between adjacent storage racks (1),
at least one bidirectional shuttle (6) for transporting stored goods (3) or containers (7) for the stored goods (3) from or to a storage space (4), wherein the shuttle(s) (6) is/are designed to travel on aisle sections (8) formed in the rack aisles (5), preferably by guide rails, in a rack level (10) and to travel on one or more of the aisle sections (8), preferably at the ends of the connecting sections (9) of the rack storage unit (2) which connect the rack aisles (5), and
at least one lifter (11) situated adjacent to an aisle section (8) or connecting section (9), wherein the at least one lifter (11) is designed to transfer and/or accept stored goods (3) or a container (7) for stored goods (3) to and/or from a shuttle (6), and to vertically transport stored goods (3) or a container (7) between rack levels (10),
**characterized in that**
the lifter (11), directly following a vertical transport of stored goods (3) or one or more containers (7) from a first rack level (10) to a second rack level (10), transports stored goods or one or more containers (7) from the second rack level (10), or from a third rack level (10) adjoining the second rack level (10), into the first rack level (10) or into a fourth rack level (10),
and that for each rack level (10) and lifter (11), two buffer tracks adjoin a, or the at least one, lifter (11), wherein the lifter (11) is situated between the buffer tracks, and each of the buffer tracks may be approached by a storage robot or shuttle (6).

2. The method according to claim 1, **characterized in that** at least one of the rack levels (10) is a storing level, and/or at least one of the rack levels (10) is a replenishing or retrieving level.

3. The method according to claim 1 or 2, **characterized in that** the at least one lifter (11) has one or more vertically movable lift trucks (13), preferably at a mast (12) of the at least one lifter (11), for at least one stored item (3) and/or at least one container each (7).

4. The method according to one of claims 1 through 3, **characterized in that** storage and retrieval of stored goods (3) from preferably multiple storage levels is made possible on one or more replenishing or retrieving levels.

5. The method according to one of claims 1 through 4, **characterized in that** the at least one lifter (11) transfers and/or accepts stored goods (3) or a container (7) to or from a buffer space (14), the buffer space (14) preferably being assigned to a rack level (10).

6. The method according to one of claims 1 through 5, **characterized in that** the following steps are carried out within the scope of the storage and/or removal of the stored goods (3):
- Transfer of stored goods (3) from a replenishing or retrieving level to a buffer space (14);
- Acceptance of the stored goods (3) from the buffer space (14) on the replenishing or retrieving level by a lifter (11);
- Vertical transport of the stored goods (3) onto a storage level by the lifter (11);
- Delivery of the stored goods (3) to a buffer space (14) on the storage level by the lifter (11);
- Acceptance of the stored goods (3) from the buffer space (14) on the storage level by the shuttle (6);
- Storage of the stored goods (3) in a rack aisle (5) by a shuttle (6);
- Retrieval of stored goods (3) from a rack aisle (5) by the shuttle (6);
- Transfer of the stored goods (3) to a second buffer space (14) on the storage level by the shuttle (6);
- Acceptance of the stored goods (3) from the second buffer space (14) by a lifter (11);
- Vertical transport of the stored goods (3) to a replenishing or retrieving level by the lifter (11);
- Delivery of the stored goods (3) to a buffer track by the lifter (11); and
- Transfer of the stored goods (3) from the buffer track to a workstation, a conveyor system, or a warehouse vehicle.

7. The method according to one of claims 1 through 6, **characterized in that** for each rack level (10) and lifter (11), a buffer track adjoins a, or the at least one, lifter (11), with preferably multiple buffer tracks being arranged in alternation as storage tracks and retrieval tracks.

8. The method according to claim 7, **characterized in that** for each rack level (10) and lifter (11), a further buffer track adjoins a, or the at least one, lifter (11), so that the lifter (11) is situated between the buffer tracks, but the further buffer track cannot be accessed by a shuttle (6).

9. The method according to one of claims 1 through 8, **characterized in that** sequenced retrieval takes place or is made possible.

10. The method according to one of claims 1 through 9, **characterized in that** a higher-order control system is associated with the storage system for preferably fully automatic functioning, wherein preferably at least one area of the storage system is deactivated if a person, for example a service technician, enters a predefinable area of the storage system or enters the storage system.

11. The method according to one of claims 1 through 10, **characterized in that** at least one shuttle (6) may approach a suitable lifter (11) with a workstation situated directly at the lifter (11).

12. The method according to one of claims 1 through 11, **characterized in that** multiple workstations are arranged one above the other and/or next to one another at the same lifter (11).

13. The method according to one of claims 1 through 12, **characterized in that** a shuttle lift associated with the storage system is used for the at least one shuttle (6).

14. A storage system, in particular a storage and removal system, preferably for carrying out the method for storing and/or removing stored goods (3) in or from a storage system according to one of claims 1 through 13, with
a rack storage unit (2) having multiple spaced-apart storage racks (1), wherein the storage racks (1) have one or more storage spaces (4) for stored goods (3) in multiple superposed rack levels (10), and wherein a rack aisle (5) is formed in each case between adjacent storage racks (1),
at least one bidirectional shuttle (6) for transporting stored goods (3) or containers (7) for the stored goods (3) from or to a storage space (4), wherein the shuttle(s) (6) is/are designed to travel on aisle sections (8) formed in the rack aisles (5), preferably by guide rails, in a rack level (10), and to travel on one or more of the aisle sections (8), preferably at the ends of the connecting sections (9) of the rack storage unit (2) which connect the rack aisles (5), and
at least one lifter (11) situated adjacent to an aisle section (8) or connecting section (9), wherein the at least one lifter (11) is designed to transfer and/or accept stored goods (3) or a container (7) for stored goods (3) to and/or from a shuttle (6), and to vertically transport stored goods (3) or a container (7) between rack levels (10),
**characterized in that**
the lifter is designed in such a way that, directly following a vertical transport of stored goods (3) or one or more containers (7) from a first rack level (10) to a second rack level (10), the lifter (11) can transport stored goods (3) or one or more containers (7) from the second rack level (10), or from a third rack level (10) adjoining the second rack level (10), into the first rack level (10) or into a fourth rack level (10), and that
for each rack level (10) and lifter (11), two buffer tracks adjoin a, or the at least one, lifter (11), wherein the lifter (11) is situated between the buffer tracks, and each of the buffer tracks may be approached by a storage robot or shuttle (6).

## Revendications

1. Procédé de stockage et/ou de prélèvement d'une marchandise stockée (3) dans ou hors d'un système de stockage, en particulier un système de stockage et de prélèvement, comprenant un entrepôt à rayonnages (2) comportant plusieurs rayonnages de stockage (1) espacés les uns des autres, les rayonnages de stockage (1) comportant, sur plusieurs niveaux de rayonnage superposés (10), un ou plusieurs emplacements de stockage (4) destinés à une marchandise stockée (3), une allée de rayonnage (5) étant formée entre deux rayonnages de stockage (1) adjacents,
au moins une navette bidirectionnelle (6) destinée au transport de marchandises stockées (3) ou de conteneurs (7) destinés aux marchandises stockées (3) depuis ou vers un emplacement de stockage (4), la ou les navettes (6) étant conçues pour circuler sur des tronçons d'allée (8) formés dans les allées de rayonnage (5), de préférence par des rails de guidage, au sein d'un niveau de rayonnage (10), et sur un ou plusieurs tronçons de liaison (9) de l'entrepôt à rayonnages (2) reliant les tronçons d'allée (8), de préférence aux extrémités des allées de rayonnage (5),
et au moins un élévateur (11) disposé de manière adjacente à un tronçon d'allée (8) ou à un tronçon de liaison (9), l'au moins un élévateur (11) étant conçu pour transférer et/ou reprendre une marchandise stockée (3) ou un conteneur (7) destiné à une marchandise stockée (3) vers et/ou depuis une navette (6), et pour assurer le transport vertical d'une marchandise stockée (3) ou d'un conteneur (7) entre les niveaux de rayonnage (10),
**caractérisé en ce que**
l'élévateur (11), immédiatement à la suite d'un transport vertical d'une marchandise stockée (3) ou d'un ou plusieurs conteneurs (7) depuis un premier niveau de rayonnage (10) vers un deuxième niveau de rayonnage (10), transporte une marchandise stockée (3) ou un ou plusieurs conteneurs (7) depuis le deuxième niveau de rayonnage (10) ou depuis un troisième niveau de rayonnage (10) adjacent au deuxième niveau de rayonnage (10) vers le premier niveau de rayonnage (10) ou vers un quatrième niveau de rayonnage (10) et
**en ce que**
pour chaque niveau de rayonnage (10) et chaque élévateur (11), deux voies tampons sont disposées de manière adjacente à l'au moins un élévateur (11), l'élévateur (11) se trouvant entre les voies tampons et chacune des voies tampons pouvant être desservie par un robot de stockage ou une navette (6).

2. Procédé selon la revendication 1, **caractérisé en ce qu'**au moins un des niveaux de rayonnage (10) constitue un niveau de stockage et/ou qu'au moins un des niveaux de rayonnage (10) constitue un niveau de réapprovisionnement ou de sortie.

3. Procédé selon la revendication 1 ou 2, **caractérisé en ce que** l'au moins un élévateur (11) comporte un ou plusieurs chariots de levage (13), de préférence déplaçables verticalement sur un mât (12) de l'au moins un élévateur (11), chacun destiné à au moins une marchandise stockée (3) et/ou à au moins un conteneur (7).

4. Procédé selon l'une des revendications 1 à 3, **caractérisé en ce que** le stockage et le déstockage de marchandises stockées (3) sont rendus possibles, de préférence depuis plusieurs niveaux de stockage vers un ou plusieurs niveaux de réapprovisionnement ou de sortie.

5. Procédé selon l'une des revendications 1 à 4, **caractérisé en ce qu'**un transfert et/ou une reprise d'une marchandise stockée (3) ou d'un conteneur (7) par l'au moins un élévateur (11) vers ou depuis un emplacement tampon (14) a lieu, l'emplacement tampon (14) étant de préférence associé à un niveau de rayonnage (10).

6. Procédé selon l'une des revendications 1 à 5, **caractérisé en ce que**, dans le cadre du stockage et/ou du prélèvement de la marchandise stockée (3), les étapes suivantes sont exécutées :
- transfert d'une marchandise stockée (3) depuis un niveau de réapprovisionnement ou de sortie vers un emplacement tampon (14) ;
- prise en charge de la marchandise stockée (3) depuis l'emplacement tampon (14) situé sur le niveau de réapprovisionnement ou de sortie par un élévateur (11) ;
- transport vertical de la marchandise stockée (3) vers un niveau de stockage par l'élévateur (11) ;
- dépose de la marchandise stockée (3) sur un emplacement tampon (14) au niveau de stockage par l'élévateur (11) ;
- prise en charge de la marchandise stockée (3) depuis l'emplacement tampon (14) au niveau de stockage par la navette (6) ;
- stockage de la marchandise stockée (3) dans une allée de rayonnage (5) par une navette (6) ;
- prélèvement d'une marchandise stockée (3) depuis une allée de rayonnage (5) par la navette (6) ;
- transfert de la marchandise stockée (3) vers un deuxième emplacement tampon (14) au niveau de stockage par la navette (6) ;
- prise en charge de la marchandise stockée (3) depuis le deuxième emplacement tampon (14) par un élévateur (11) ;
- transport vertical de la marchandise stockée (3) vers un niveau de réapprovisionnement ou de sortie par l'élévateur (11) ;
- dépose de la marchandise stockée (3) sur une voie tampon par l'élévateur (11) ; et
- transfert de la marchandise stockée (3) depuis la voie tampon vers un poste de travail, un système de convoyage ou un véhicule de magasinage.

7. Procédé selon l'une des revendications 1 à 6, **caractérisé en ce que**, pour chaque niveau de rayonnage (10) et chaque élévateur (11), une voie tampon est disposée de manière adjacente à l'au moins un élévateur (11), plusieurs voies tampons étant de préférence disposées alternativement comme voies d'entrée et de sortie.

8. Procédé selon la revendication 7, **caractérisé en ce que**, pour chaque niveau de rayonnage (10) et chaque élévateur (11), une voie tampon supplémentaire est disposée de manière adjacente à l'au moins un élévateur (11), de sorte que l'élévateur (11) se trouve entre les voies tampons, la voie tampon supplémentaire ne pouvant pas être desservie par une navette (6).

9. Procédé selon l'une des revendications 1 à 8, **caractérisé en ce qu'**un prélèvement séquencé a lieu ou est rendu possible.

10. Procédé selon l'une des revendications 1 à 9, **caractérisé en ce qu'**un système de commande supérieur est associé au système de stockage, de préférence pour un fonctionnement entièrement automatique, au moins une zone du système de stockage étant de préférence désactivée lorsqu'une personne, par exemple un technicien de maintenance, pénètre dans une zone prédéfinie du système de stockage ou dans le système de stockage.

11. Procédé selon l'une des revendications 1 à 10, **caractérisé en ce qu'**au moins une navette (6) peut desservir un élévateur approprié (11) comportant un poste de travail disposé directement sur l'élévateur (11).

12. Procédé selon l'une des revendications 1 à 11, **caractérisé en ce que** plusieurs postes de travail sont disposés les uns au-dessus des autres et/ou les uns à côté des autres sur le même élévateur (11).

13. Procédé selon l'une des revendications 1 à 12, **caractérisé en ce qu'**un élévateur de navette associé au système de stockage est utilisé pour l'au moins une navette (6).

14. Système de stockage, en particulier système de stockage et de prélèvement, destiné de préférence à la mise en œuvre du procédé de stockage et/ou de prélèvement d'une marchandise stockée (3) dans ou hors d'un système de stockage selon l'une des revendications 1 à 13, comprenant
un entrepôt à rayonnages (2) comportant plusieurs rayonnages de stockage (1) espacés les uns des autres, les rayonnages de stockage (1) comportant, sur plusieurs niveaux de rayonnage superposés (10), un ou plusieurs emplacements (4) destinés à une marchandise stockée (3), une allée de rayonnage (5) étant formée entre deux rayonnages de stockage (1) adjacents,
au moins une navette bidirectionnelle (6) destinée au transport de marchandises stockées (3) ou de conteneurs (7) destinés aux marchandises stockées (3) depuis ou vers un emplacement de stockage (4), la ou les navettes (6) étant conçues pour circuler sur des tronçons d'allée (8) formés dans les allées de rayonnage (5), de préférence par des rails de guidage, au sein d'un niveau de rayonnage (10), et sur un ou plusieurs tronçons de liaison (9) de l'entrepôt à rayonnages (2) reliant les tronçons d'allée (8), de préférence aux extrémités des allées de rayonnage (5),
et au moins un élévateur (11) disposé de manière adjacente à un tronçon d'allée (8) ou à un tronçon de liaison (9), l'au moins un élévateur (11) étant conçu pour transférer et/ou reprendre une marchandise stockée (3) ou un conteneur (7) destiné à une marchandise stockée (3) vers et/ou depuis une navette (6), et pour assurer le transport vertical d'une marchandise stockée (3) ou d'un conteneur (7) entre des niveaux de rayonnage (10),
**caractérisé en ce que**
l'élévateur (11) est conçu de telle sorte qu'il puisse, immédiatement à la suite d'un transport vertical d'une marchandise stockée (3) ou d'un ou plusieurs conteneurs (7) depuis un premier niveau de rayonnage (10) vers un deuxième niveau de rayonnage (10), transporter une marchandise stockée (3) ou un ou plusieurs conteneurs (7) depuis le deuxième niveau de rayonnage (10) ou depuis un troisième niveau de rayonnage (10) adjacent au deuxième niveau de rayonnage (10) vers le premier niveau de rayonnage (10) ou vers un quatrième niveau de rayonnage (10), et
**en ce que**
pour chaque niveau de rayonnage (10) et chaque élévateur (11), deux voies tampons sont disposées de manière adjacente à l'au moins un élévateur (11), l'élévateur (11) se trouvant entre les voies tampons, chacune des voies tampons pouvant être desservie par un robot de stockage ou une navette (6).
